# EUROPEAN PATENT SPECIFICATION

(11) **EP 4 255 639 B1**
(45) Date of publication and mention of the grant of the patent: **27.05.2026**
(21) Application number: 21815798.0
(22) Date of filing: 03.11.2021
(51) Int. Cl.: B05B 7/00

(54) **DISPENSING NOZZLE HAVING A TUBULAR EXIT ZONE COMPRISING VANES**
AUSGABEDÜSE MIT EINER ROHRFÖRMIGEN AUSGANGSZONE MIT SCHAUFELN
BUSE DE DISTRIBUTION AYANT UNE ZONE DE SORTIE TUBULAIRE COMPRENANT DES AUBES

(30) Priority: 02.12.2020 US 202063120521 P
(43) Date of publication of application: 11.10.2023
(73) Proprietor: DDP Specialty Electronic Materials US, LLC, Wilmington, DE 19805 (US)
(72) Inventor: SCHROER, Daniel, Saginaw, Michigan 48603 (US); LANGMAID, Joseph, Caro, Michigan 48723 (US); RICKARD, Mark, Midland, Michigan 48642 (US); SONI, Piyush, Midland, Michigan 48642 (US)
(74) Representative: Abitz & Partner
(86) International application number: PCT/US2021/057848
(87) International publication number: WO 2022/119682

(56) References cited:
- WO-A1-2009/146999
- WO-A1-96/00130
- CN-A- 110 237 953
- CN-B- 110 237 953
- DE-A1- 102016 221 729
- US-A- 4 277 030

## Description

### Background of the Invention

Field of the Invention. This invention relates to improved dispensing nozzles suitable for applying spray foams and devices comprising the same, and relates particularly to satisfactorily applying spray foams in an environmentally-friendly manner. The dispensing nozzles are especially suitable for applying spray foams using carbon dioxide blowing agents, and can be used with two component spray foams.

Description of Related Art. Many existing blowing agents used in the dispensing and frothing of one and two component spray foams, particularly two component low pressure (TCLP) spray foams, are undesirable due to their high global warming potential (GWP) properties. Such undesirable blowing agents are primarily hydrofluorocarbon (HFC) based. Low GWP hydrofluoro-olefins (HFO) alternatives have been considered as potential replacements for HFC blowing agents. However, it has been found that HFO alternatives can react with catalysts used in some spray foams, degrading the foam performance and possibly even posing industrial hygiene concerns.

A more desirable blowing agent is carbon dioxide (CO₂); however, CO₂ has its own challenges when used to dispense foams. Carbon dioxide is less soluble than either HFCs or HFOs in foam-making chemicals. This means a lower amount of the blowing agent (CO₂) is present in the foam-making chemicals, which results in less frothing of the dispensed foam. Therefore, the use of CO₂ as a blowing agent results in a foam mixture that sprays with larger droplets and has more liquid than foam mixtures sprayed with HFC or HFO alternatives. Thus, the dispensed foam mixture tends to spray in a concentrated stream with splattering rather than a well distributed misty spray pattern.

What is needed is a nozzle, suitable for dispensing liquid foamable products, having features that improve the spray pattern of the foam mixture when applied to a surface. Such nozzles are especially desirable when environmentally-friendly but perhaps less than ideal blowing agents such as CO₂ are used, and especially useful for the application of two component spray foams. CN110237953 discloses an atomizing nozzle in which two liquids and a gas are collision-mixed inside an internal atomization chamber using swirling plates, producing a fine spray discharged through a downstream outlet.

### Brief Summary of the Invention

This invention relates to a nozzle suitable for dispensing liquid foamable products, the nozzle comprising a tubular exit zone having an inlet and an outlet;
the tubular exit zone having an inner wall surface defining a passageway for dispensing, the passageway having a centerline axis; the tubular exit zone further having a plurality of vanes attached to the inner wall surface parallel to the centerline axis with the vanes extending radially into the passageway for dispensing; the vanes having a length having a length dimension, a thickness having a thickness dimension, and a width having a width dimension, the thickness dimension being smaller than the width dimension, and the width dimension being smaller than the length dimension; the length dimension being a distance the vane contacts the inner wall surface parallel to the centerline axis, and the thickness dimension being an effective thickness of the vane at the inner wall surface perpendicular to the centerline axis; and the width dimension being a distance from the inner wall surface that the vane extends into the passageway for dispensing; and wherein the vanes do not connect or touch at the centerline of the passageway for dispensing, wherein the outlet for the tubular exit zone is an exit face of the nozzle and the vanes end at the plane of the exit face.

This invention also relates to a process for dispensing liquid foamable products with a nozzle comprising a tubular exit zone having an inlet and an outlet, comprising the steps of:
a) supplying a liquid foamable product comprising at least one blowing agent to the inlet of the tubular exit zone, the tubular exit zone having an inner wall surface defining a passageway for dispensing, the passageway having a centerline axis; the tubular exit zone further having a plurality of vanes attached to the inner wall surface parallel to the centerline axis with the vanes extending radially into the passageway for dispensing; the vanes having a length having a length dimension, a thickness having a thickness dimension, and a width having a width dimension, the thickness dimension being smaller than the width dimension, and the width dimension being smaller than the length dimension;
   the length dimension being a distance the vane contacts the inner wall surface parallel to the centerline axis, and the thickness dimension being an effective thickness of the vane at the inner wall surface perpendicular to the centerline axis; and the width dimension being a distance from the inner wall surface that the vane extends into the passageway for dispensing; and wherein the vanes do not connect or touch at the centerline of the passageway for dispensing, wherein the outlet for the tubular exit zone is an exit face of the nozzle and the vanes end at the plane of the exit face; and
b) dispensing the liquid foamable product from the outlet of the tubular exit zone.

### Brief Description of the Drawings

**Fig. 1** is an illustration of one version of a tubular exit zone that simultaneously increases the shear on the foamable mixture while dividing the foamable mixture into separate streams.

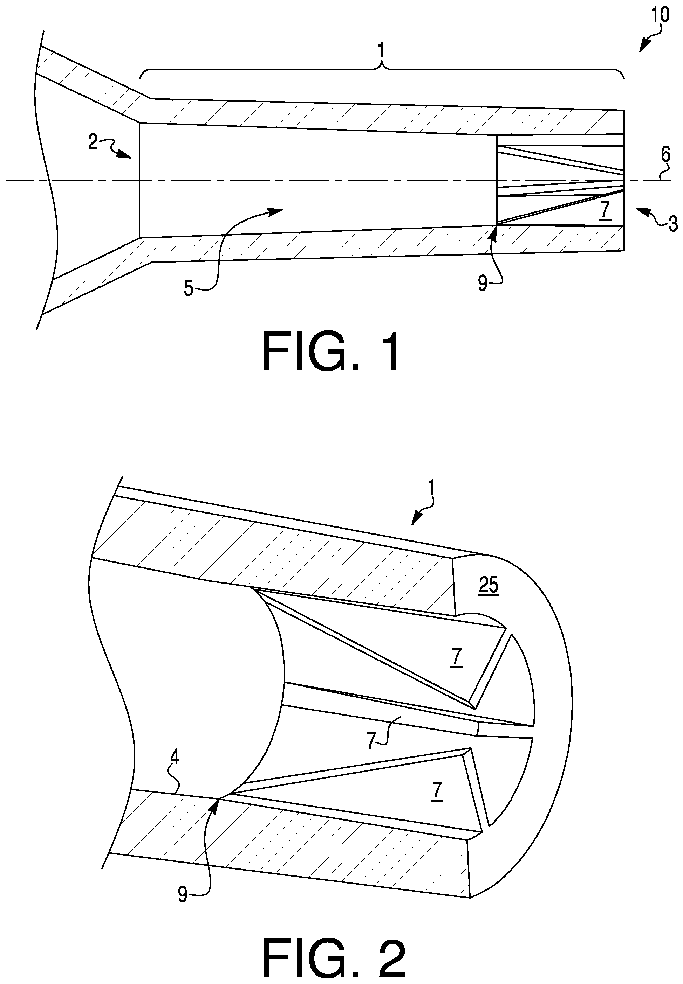

**Fig. 2** is a detail of the tubular exit zone of **Fig. 1** illustrating the embodiment wherein the tubular exit zone outlet ends at the exit face of the dispensing nozzle and the vanes end at the plane of the exit face, that is, they are flush with the plane of the exit face; and the width dimension of each vane has a maximum value at the outlet for the tubular exit zone, or at the plane of the exit face, and the width dimension decreases in value along the vane in the direction away from the exit face parallel to length of the vane; and the thickness dimension decreases in value along the vane in the direction away from the exit face parallel to length of the vane.
**Fig. 3** is an illustration of a triangular vane having a length, a thickness, and a width, illustrating the associated length dimension, thickness dimension, and width dimension, including various vane thickness embodiments.
**Fig. 4** is an illustration of a general depiction of a dispensing nozzle having tubular exit zone of the prior art that is essentially a hollow tube.
**Fig. 5** is an illustration of the cross section of one embodiment of a dispensing nozzle wherein a mixing chamber suitable for two-component spray foams is attached to the inlet of a tubular exit zone with vanes.
**Fig. 6** is an end-on view of a dispensing nozzle of **Fig. 5** showing an embodiment having 6 vanes symmetrically distributed radially about the centerline of the passageway for dispensing.
**Fig. 7** is a perspective view of a dispensing nozzle of **Figs. 5 & 6** having a relatively transparent or see-through housing.
**Fig. 8** is an illustration of one type of spray gun that could include the dispensing nozzle having a tubular exit zone with vanes.
**Fig. 9** is an illustration of the undesirable spray pattern made from the combination of a two-component foam with a CO₂ blowing agent, using a dispensing nozzle that has a tubular exit zone that is essentially a hollow tube without any vanes.
**Fig. 10** is an illustration of the desirable spray pattern made from the combination of a two-component foam with a CO₂ blowing agent, using a dispensing nozzle that has a tubular exit zone having vanes that are symmetrically distributed radially in the tubular exit zone.

### Detailed Description of the Invention

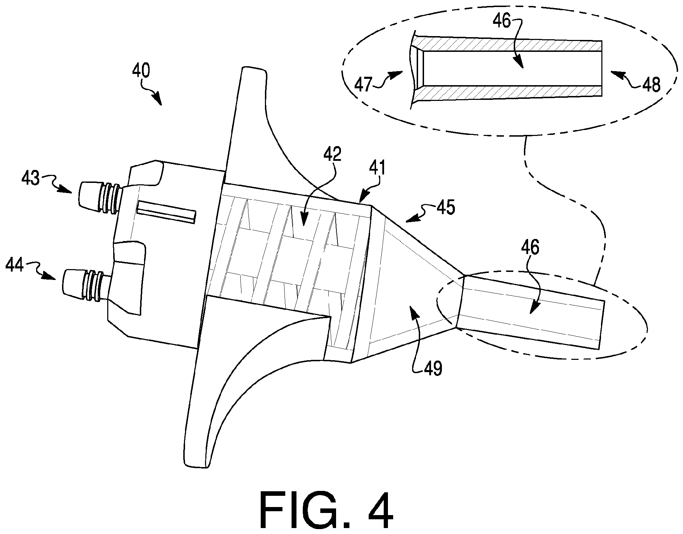

**Fig. 4** provides a general depiction of a prior art dispensing nozzle **40** that has been referred to as a "mixing and dispensing nozzle" or an "anti-crossover or crossover-resistant nozzle" (in United States Pat. No. 6,021,961 to Brown); or a "mixing device" (in United States Pat. No.US 10,322,385 to Schulz et al.). Both the "mixing and dispensing nozzle" and the "mixing device" are designed to be the dispensing nozzle used in a spray gun, the spray gun having a gun body, a handle, a trigger, and other associated parts useful in the spray gun for spraying foams. The dispensing nozzle **40** shown in **Fig. 4** is useful in combining, mixing, and then dispensing at least two components in what is known as two-component spray foams. Conventionally, two-component spray foams typically are made from combining an "A-Component" and a "B-Component.

As shown in **Fig. 4****,** the dispensing nozzle **40** has a housing **41** that defines a chamber **42,** which is typically a mixing chamber that can have various internal parts to facilitate the mixing of the components. The dispensing nozzle further has an entrance **43** for feeding the A-Component into the mixing chamber, and a separate entrance **44** for feeding the B-Component into the mixing chamber, and there could be other entrances (not shown) for other materials if desired. The housing **41** and the chamber **42** are generally cylindrical or elongated in shape with the entrances **43** and **44** for feeding on one end and an exit opening on an opposing end **45.** The dispensing nozzle further has a tubular exit zone **46** having an inlet **47** and an outlet **48.** In the particular dispensing nozzle depicted in **Fig. 4** the inlet **47** of the tubular exit zone **46** is connected to the housing **41** via a transition **49** having a generally trapezoidal shape. **Fig. 4** further provides a detail of the tubular exit zone **46** of the prior art. As shown in the detail, the tubular exit zone is essentially a hollow tube.

It has been found that when dispensing nozzles such as those depicted in **Fig. 4** were used to spray foams using certain gaseous blowing agents such as CO₂, the foam mixture was dispensed as a concentrated stream of unacceptably large liquid droplets rather than a well-distributed spray pattern of more mist-like droplets.

Further, it was unexpectantly found that modifying the outlet of the tubular exit zone of the dispensing nozzle to simultaneously increase the shear on the foamable mixture while dividing the foamable mixture into separate streams reduced the droplet size, increased the frothing of the foam mixture, and improved the distribution of the sprayed droplets in the intended spray pattern.

Therefore, this invention relates to a nozzle suitable for dispensing liquid foamable products, the nozzle comprising a tubular exit zone having an inlet and an outlet; the tubular exit zone having an inner wall surface defining a passageway for dispensing, the passageway having a centerline axis; the tubular exit zone further having a plurality of vanes attached to the inner wall surface parallel to the centerline axis with the vanes extending radially into the passageway for dispensing; the vanes having a length having a length dimension, a thickness having a thickness dimension, and a width having a width dimension, the thickness dimension being smaller than the width dimension, and the width dimension being smaller than the length dimension; the length dimension being a distance the vane contacts the inner wall surface parallel to the centerline axis, and the thickness dimension being an effective thickness of the vane at the inner wall surface perpendicular to the centerline axis; and the width dimension being a distance from the inner wall surface that the vane extends into the passageway for dispensing; and wherein the vanes do not connect or touch at the centerline of the passageway for dispensing.

The words "nozzle" and "dispensing nozzle" are used interchangeably herein. Further, it is not intended that the nozzles described herein to be limited to the "mixing and dispensing nozzle" or an "anti-crossover or crossover-resistant nozzle" that is used with a spray gun, however, this is a preferred embodiment. It is contemplated that the principles described herein relating to a tubular exit zone having a plurality of vanes could be used at the exit of essentially any device used to spray foam; therefore, the words "nozzle" or "dispensing nozzle" are intended to include essentially any device suitable for spraying any foam composition that further has an exit passageway including a tubular exit zone having a plurality of vanes as disclosed or arranged herein.

One version of a tubular exit zone that simultaneously increases the shear on the foamable mixture while dividing the foamable mixture into separate streams is shown in **Figs. 1 & 2****.** The nozzle (not fully shown) comprises a tubular exit zone **1** having an inlet **2** and an outlet **3.** The tubular exit zone has an inner wall surface **4** defining a hollow passageway for dispensing **5** through the tubular exit zone, the passageway having a centerline axis **6.** The tubular exit zone further has a plurality of vanes **7** attached to the inner wall surface parallel to the centerline axis with the vanes extending radially into the passageway for dispensing **5.** The tubular exit zone can have a constant diameter throughout or can narrow from a larger diameter at the inlet and a slightly smaller diameter at the exit; or as shown in **Figs. 1 & 2****,** the diameter or the tubular exit zone can decrease slightly from the inlet **2** to the starting point of the vanes **9,** and then the diameter increases from the starting point of the vanes **9** to the outlet **3.** In some preferred embodiments, the diameter does not vary from the inlet to the outlet by more than 5%.

Each vane **7** has a length, a thickness, and a width. Additionally, the thickness dimension is smaller than the width dimension, and the width dimension is smaller than the length dimension. **Fig. 2** is a cross sectioned angled view of the outlet **3** of a 6-vaned tubular exit zone **1** cut axially along the centerline axis, showing three of the vanes starting at point **9** in the tubular passageway.

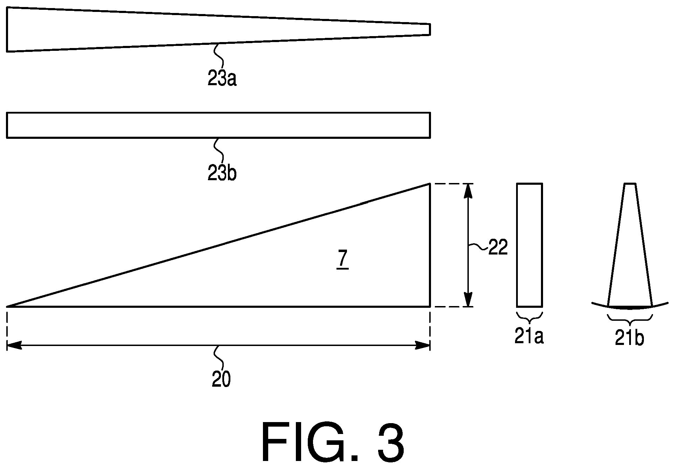

As shown in **Fig. 2** and in detail **Fig. 3****,** preferably the vane **7** is triangular in shape with the long edge of the vane being parallel with the centerline axis and further contacting the inner wall surface **4.** The vane length is characterized by a vane length dimension; the length dimension being defined herein as the distance **20** the vane contacts the inner wall surface parallel to the centerline axis. Preferably, all the vanes have the same length dimension.

The vane thickness is characterized by a thickness dimension; the thickness dimension being defined herein as the effective thickness of the vane at the inner wall surface perpendicular to the centerline axis. If the thickness of the vane varies along the length of the vane at the inner wall surface, the effective thickness of the vane is therefore considered to be the maximum thickness dimension of the vane at the inner wall surface along the length of the vane. As shown in **Fig. 3****,** the vane thickness dimension **21a** is shown for a vane having a rectangular end and thus having the same thickness at the inner wall surface as radially into the passageway. Also shown in **Fig. 3** is one alternative thickness dimension **21b** shown for a vane having a trapezoidal end and thus having a larger and different thickness at the inner wall surface, with the vane thickness being progressively less radially away from the inner wall surface into the passageway. In this instance, the thickness dimension is the distance shown in **Fig. 3** at the inner wall surface perpendicular to the centerline axis. For avoidance of doubt, since the inner wall surface is generally curved, the effective thickness is essentially the straight-line distance through the vane at the point the vane contacts the inner wall as shown in **Fig. 3** for **21b.**

In some embodiments, the thickness dimension of each vane increases along the length of the vane from a minimum value at the outlet for the tubular exit zone. One such illustration of this embodiment is shown in **Fig. 3****,** wherein **23a** is a top view of the triangular vane **7,** illustrating the vane that has a trapezoidal appearance when viewed radially from the centerline axis. In this instance, the vane has a minimum thickness dimension at the tubular exit zone outlet (or the exit face **25**) and a maximum thickness dimension at point **9** in the tubular passageway where the vane ends. In a further version of this embodiment, while the thickness dimension varies along the length of the vane, the vane has the same thickness dimension at the inner wall surface as radially into the passageway; that is, the vane has a combination of the features of **23a** combined with the features of **21a.** Still another version is the combination of embodiments embraced by the combination of **23a** with **21b.** Also shown in **Fig.** 3 is alternate embodiment **23b,** a top view of the triangular vane **7,** illustrating the vane has a rectangular appearance when viewed radially from the centerline axis; in other words the thickness dimension does not vary along the length of the vane. Again, in a further version of this embodiment, the thickness dimension is the same along the length of the triangular vane **7** and the vane has the same thickness dimension at the inner wall surface as radially into the passageway; which is the combination of **23b** with the features of **21a.** Still another version is the combination of embodiments embraced by the combination of **23b** with **21b.**

The vane width is characterized by a width dimension; the width dimension being defined herein as the maximum distance **22** from the inner wall surface that the vane extends into the passageway for dispensing. Preferably each vane is triangular shaped along its length, with the width varying linearly from a maximum at the tubular exit zone outlet (or the exit face **25**) to a minimum at the opposing end of the vane (point **9** in the tubular passageway). The vanes further do not connect or touch at the centerline of the passageway for dispensing. Preferably, the vanes do not extend radially into the passageway as far as the centerline axis.

Preferably, all the vanes have a similar shape and dimensions, that is, all the vanes have the same combination of width, thickness, and length dimensions.

The nozzle suitable for dispensing liquid foamable products comprises a tubular exit zone having a plurality of vanes attached to the inner wall surface parallel to the centerline axis with the vanes extending radially into the passageway for dispensing. By "plurality" it is meant 2 or more vanes. In some embodiments, the nozzle comprises a tubular exit zone having 3 or more vanes. In some other embodiments, the nozzle comprises a tubular exit zone having 5 to 8 vanes; in some other embodiments, the nozzle comprises a tubular exit zone having 5 to 10 vanes. It is believed that 10 is a practical maximum for most foamable compositions.

The nozzle suitable for dispensing liquid foamable products comprises a tubular exit zone having an inlet and an outlet, and in some embodiments the outlet for the tubular exit zone is an exit face of the dispensing nozzle. The vanes are preferably present in the tubular exit zone extending from the outlet end of the tubular exit zone into the tubular exit zone, the vanes ending some distance (parallel to the centerline) between the tubular exit zone inlet and outlet. Generally the vanes will extend in from outlet (or the exit face **25**) into the tubular exit zone a distance parallel to the centerline that is no more than about one third the total length of the tubular exit zone, and preferably the vanes will extend no more than about one fourth the total length of the tubular exit zone. In a preferred embodiment illustrated in **Figs. 1 & 2****,** the distance parallel to the centerline is measured from the outlet (or the exit face **25**) to a point **9** in the tubular passageway where the vanes end. Preferably there are no vanes positioned near or beginning at the inlet of the tubular exit zone; rather, the vanes are preferably only present near the outlet of the of the tubular exit zone. Further, in many instances it is desirable for the vanes to end flush with the exit face of the dispensing nozzle. Said another way, it is desirable for the vanes to not extend outside the outlet of the tubular exit zone, but to end flush with the outside surface of the tubular exit zone outlet as is shown in **Figs.1 & 2****;** the tubular exit zone outlet **3** ends at the exit face **25,** and the vanes **7** end at the plane of the exit face, that is, they are flush with the plane of the exit face.

In some embodiments, such as shown in **Figs. 1& 2,** the width dimension of each vane has a maximum value at the outlet for the tubular exit zone, or at the plane of the exit face, and decreases in value along the length of the vane to a point **9** in the tubular passageway.

In some embodiments, the thickness dimension of each vane has a maximum value at the inner wall surface and decreases radially into the passageway for dispensing as shown in **Fig. 3** as **21b.** In some other embodiments, the thickness dimension of each vane does not vary from the inner wall surface into the passageway for dispensing as shown in **Fig. 3** as **21a**.

In some preferred embodiments, the vanes are symmetrically distributed radially about the centerline of the passageway for dispensing. However, in some embodiments the vanes are unsymmetrically distributed radially about centerline of the passageway for dispensing.

While the figures depict the vanes being located in the tubular exit zone with the vane length-wise being strictly parallel to the centerline axis and the vane width-wise being strictly radial in relation to the centerline axis of the tubular exit zone, if desirable, the vanes could be positioned offset from a truly parallel or radial position in relation to the centerline axis of the tubular exit zone if desired, as long as spray performance was not affected.

The devices suitable for dispensing liquid foamable products that could comprise nozzles having the tubular exit zone with vanes described herein include spray parts known as "mixing and dispensing nozzles" or an "anti-crossover or crossover-resistant nozzles", or even "mixing devices". For example, the tubular exit zone could be attached to the exit of a mixing device or other nozzles could be modified to include the tubular exit zone described herein.

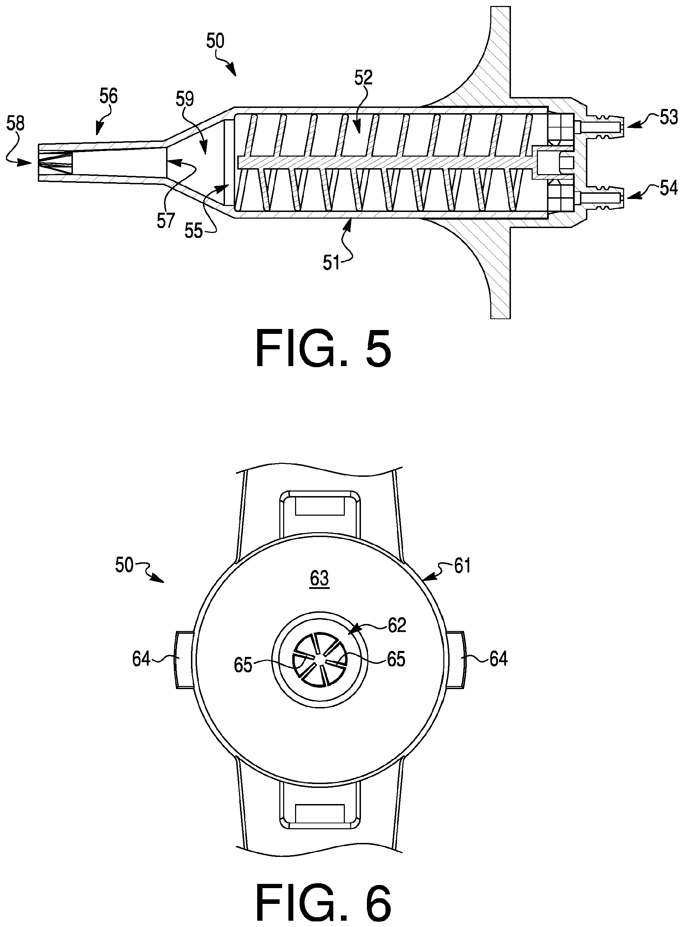

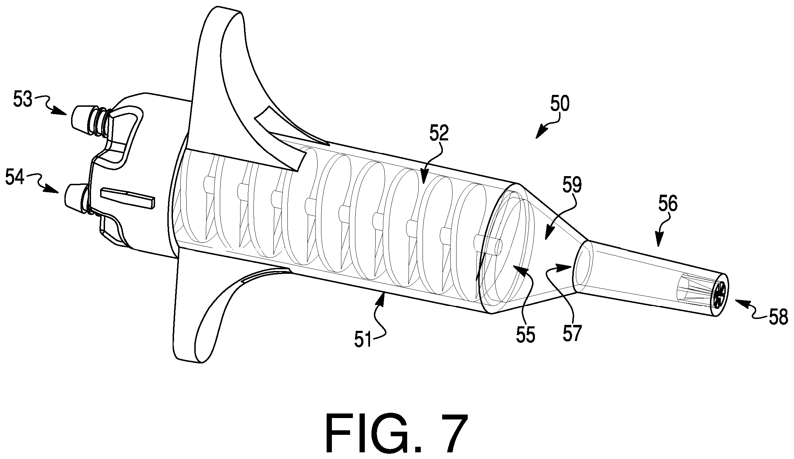

One suitable dispensing nozzle is one that combines, mixes, and then dispenses a foamable mixture of at least two components in what is known as two-component spray foams. Accordingly, in one embodiment a mixing chamber is attached to the inlet of the tubular exit zone, as shown in dispensing nozzle **50** for two-component spray foams in **Figs. 5, 6****, &** **7** that has been modified to include the tubular exit zone with vanes. The dispensing nozzle comprises a housing **51** that defines a chamber **52,** which is typically a mixing chamber that can have various internal parts to facilitate the mixing of the components. The dispensing nozzle further has an entrance **53** for feeding the A-Component into the mixing chamber, and a separate entrance **54** for feeding the B-Component into the mixing chamber, and there could be other entrances (not shown) for other materials such as other foam components or blowing agents, if desired. The housing **51** and the chamber **52** are generally cylindrical or elongated in shape with the entrances **53** and **54** for feeding on one end and an exit opening **55** on an opposing end. The dispensing nozzle further has a transition piece **59** to the tubular exit zone **56** having an inlet **57** and an outlet **58** with vanes in the outlet end of the tubular exist zone.

**Fig. 6** is an end-on view of the dispensing nozzle **50** for two-component spray foams.as shown in **Fig. 5****.** The dispensing nozzle housing **61** is shown connected to the tubular exit zone **62** via transition piece **63.** The dispensing nozzle further has flanges **64** for mounting the nozzle in a spray gun. The tubular exit zone has 6 vanes **65** symmetrically distributed radially about the centerline of the passageway for dispensing. The vanes extend into the passageway for dispensing but do not connect or touch at the centerline of the passageway for dispensing. This leaves a hollow straight-line zone at the centerline of the passageway for dispensing the foamable material, and the vanes further divide the foamable material into separate streams. This arrangement of vanes with a hollow straight-line dispensing zone at the centerline of the passageway simultaneously divides the foamable mixture into separate streams while also providing additional shear into the foamable mixture at the outlet of the tubular exit zone.

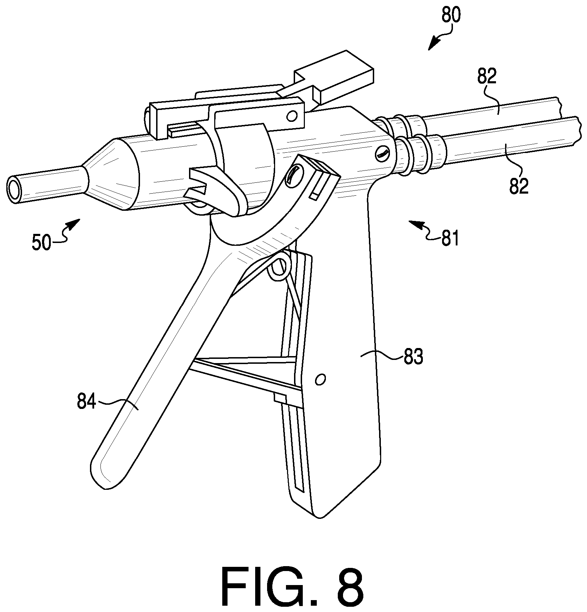

Useful dispensing nozzles including the tubular exit zone with vanes include any number of "spray gun nozzles" that could comprise a tubular exit zone with vanes described herein. One such dispensing device in the form of a spray gun **80** is shown in **Fig. 8**; it is useful in combining, mixing, and then dispensing at least two components in what is known as two-component spray foams. As shown in the **Fig. 8****,** as one example, the spray gun **80** typically comprises a gun body **81** having one or more entrances **82** for the components to be sprayed, a handle **83,** and a trigger **84.** Attached to the spray gun **80** is the dispensing nozzle **50** for two-component spray foams as shown in **Figs. 5, 6****, &** **7** that includes the tubular exit zone with vanes, although for simplicity the vanes and other internal details of dispensing nozzle **50** are not shown or reproduced in **Fig. 8****.** Other such devices are possible.

This invention also relates to a process for dispensing liquid foamable products with a nozzle comprising a tubular exit zone having an inlet and an outlet, comprising the steps of:
a) supplying a liquid foamable product comprising at least one blowing agent to the inlet of the tubular exit zone, the tubular exit zone having an inner wall surface defining a passageway for dispensing, the passageway having a centerline axis; the tubular exit zone further having a plurality of vanes attached to the inner wall surface parallel to the centerline axis with the vanes extending radially into the passageway for dispensing; the vanes having a length having a length dimension, a thickness having a thickness dimension, and a width having a width dimension, the thickness dimension being smaller than the width dimension, and the width dimension being smaller than the length dimension;
   the length dimension being a distance the vane contacts the inner wall surface parallel to the centerline axis, and the thickness dimension being an effective thickness of the vane at the inner wall surface perpendicular to the centerline axis; and the width dimension being a distance from the inner wall surface that the vane extends into the passageway for dispensing; and wherein the vanes do not connect or touch at the centerline of the passageway for dispensing; and
b) dispensing the liquid foamable product from the outlet of the tubular exit zone.

In a preferred embodiment, the process uses an environmentally-friendly blowing agent such as carbon dioxide. In some embodiments, the process further includes a step, prior to step a), of mixing more than one component to make a liquid foamable product, preferably mixing a two component foamable product and a blowing agent. Preferably the mixing is accomplished in the nozzle prior to the inlet of the tubular exit zone.

All of the features and elements of the tubular exit zone described herein can be used in the process for dispensing liquid foamable products using a nozzle comprising the said tubular exit zone. Namely, the tubular exit zone has 2 or more vanes attached to the inner wall surface parallel to the centerline axis with the vanes extending radially into the passageway for dispensing. In some embodiments, the nozzle comprises a tubular exit zone having 3 or more vanes. In some other embodiments, the nozzle comprises a tubular exit zone having 5 to 8 vanes; in other embodiments, the nozzle comprises a tubular exit zone having 5 to 10 vanes. The process can use a dispensing nozzle comprising a tubular exit zone wherein the vanes are symmetrically distributed radially about the centerline of the passageway for dispensing. Alternatively, the process can use a dispensing nozzle comprising a tubular exit zone wherein the vanes are unsymmetrically distributed radially about the centerline of the passageway for dispensing. Further, while the figures depict the vanes being located in the tubular exit zone with the vane length-wise being strictly parallel to the centerline axis and the vane width-wise being strictly radial in relation to the centerline axis of the tubular exit zone, if desirable, the vanes could be positioned offset from a truly parallel or radial position in relation to the centerline axis of the tubular exit zone if desired, as long as spray performance was not affected.

As previously discussed herein, in one embodiment of the process using a dispensing nozzle comprising a tubular exit zone, each vane is triangular shaped with the width dimension of each vane having a maximum value at the outlet for the tubular exit zone and decreasing linearly along the length of the vane to a minimum at the opposing end of the vane. Likewise, in another embodiment of the process using a dispensing nozzle comprising a tubular exit zone, the thickness dimension of each vane in the nozzle has a maximum value at the inner wall surface and decreases radially into the passageway for dispensing.

In one preferred embodiment of the process using a dispensing nozzle comprising a tubular exit zone, each of the vanes have, as shown in **Figs 1, 2****, &** **3****,** a minimum thickness dimension at the tubular exit zone outlet (or the exit face **25**) and a maximum thickness dimension at point **9** in the tubular passageway where the vane ends. One such illustration of this embodiment is shown in **Fig. 3****,** wherein **23a** is a top view of the triangular vane **7,** illustrating the vane that has a trapezoidal appearance when viewed radially from the centerline axis. In this instance, the vane has a minimum thickness dimension at the tubular exit zone outlet (or the exit face **25**) and a maximum thickness dimension at point **9** in the tubular passageway where the vane ends.

In a further version of this preferred embodiment, while the thickness dimension varies along the length of the vane, the vane has the same thickness dimension at the inner wall surface as radially into the passageway; that is, the vane has a combination of the features of **23a** combined with the features of **21a** as shown in **Fig. 3****.**

In another version of this embodiment, while the thickness dimension varies along the length of the vane, the vane thickness dimension also decreases from the inner wall surface radially into the passageway; that is, the vane has a trapezoidal shape when viewed end-on as in **Fig. 6****.** This is a combination of the features of **23a** combined with the features of **21b** as shown in **Fig. 3****.**

Further, it is generally preferred that all the vanes have the same dimensions and shape.

As previously discussed herein, in one embodiment of the process using a dispensing nozzle comprising a tubular exit zone, the dispensing nozzle further comprises a mixing chamber attached to the inlet of the tubular exit zone. Also, in still another embodiment of the process using a dispensing nozzle comprising a tubular exit zone the outlet for the tubular exit zone of the nozzle is an exit face of the nozzle.

### Examples

A two-component foam was sprayed onto a flat horizontal substrate using a CO₂ blowing agent using as a control a spray gun having a dispensing nozzle that had a hollow tubular exit zone without vanes, and then again with a spray gun having a dispensing nozzle as illustrated in **Figs. 5, 6****, &** **7** with six vanes. The foamable chemicals, the substrate, and the ambient temperatures were all between 70 and 80 degrees Fahrenheit. The end of the nozzle was 18-24 inches from the substrate.

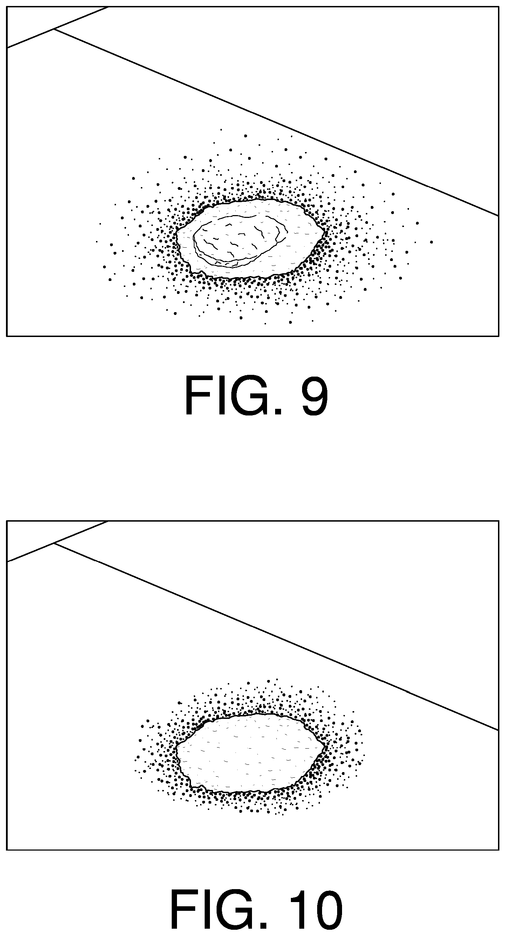

**Fig. 9** is an illustration of the undesirable spray pattern made from the combination of a two-component foam with a CO₂ blowing agent, using a dispensing nozzle that has a tubular exit zone that is essentially a hollow tube without any vanes. The resulting foam piled up in the center, had unacceptable splatter, visually provided a non-uniform spray pattern, and had poor adhesion to the substrate.

**Fig. 10** is an illustration of the desirable spray pattern made from the combination of a two-component foam with a CO₂ blowing agent, using a dispensing nozzle that has a tubular exit zone having vanes that are symmetrically distributed radially in the tubular exit zone. The resulting foam was visibly more uniformly distributed, had little splatter, visually provided a uniform spray pattern, and exhibited improved adhesion to the substrate.

## Claims

1. A nozzle (40) suitable for dispensing liquid foamable products, the nozzle (40) comprising a tubular exit zone (46) having an inlet (47) and an outlet (48); the tubular exit zone (46) having an inner wall surface defining a passageway for dispensing, the passageway having a centerline axis (8); the tubular exit zone (46) further having a plurality of vanes (7) attached to the inner wall surface parallel to the centerline axis (8) with the vanes (7) extending radially into the passageway for dispensing; the vanes (7) having a length having a length dimension, a thickness having a thickness dimension, and a width having a width dimension, the thickness dimension being smaller than the width dimension, and the width dimension being smaller than the length dimension; the length dimension being a distance the vane contacts the inner wall surface parallel to the centerline axis (8), and the thickness dimension being an effective thickness of the vane at the inner wall surface perpendicular to the centerline axis (8); and the width dimension being a distance from the inner wall surface that the vane extends into the passageway for dispensing; and wherein the vanes (7) do not connect or touch at the centerline of the passageway for dispensing; and **characterized in that** the outlet (48) for the tubular exit zone (46) is an exit face of the nozzle (40) and the vanes (7) end at the plane of the exit face.

2. The nozzle (40) of Claim 1, wherein the vanes (7) extend in from the outlet (48) into the tubular exit zone (46) a distance parallel to the centerline that is no more than about one third the total length of the tubular exit zone (46).

3. The nozzle (40) of Claim 1 or 2 having 3 or more vanes (7), preferably 5 to 10 vanes (7).

4. The nozzle (40) of any one of Claims 1 to 3 wherein the vanes (7) are symmetrically distributed radially about the centerline of the passageway for dispensing; or wherein the vanes (7) are unsymmetrically distributed radially about centerline of the passageway for dispensing.

5. The nozzle (40) of any one of Claims 1 to 4 wherein the width dimension of each vane has a maximum value at the outlet (48) for the tubular exit zone (46) and decreases along the length of the vane.

6. The nozzle (40) of any one of Claims 1 to 5 wherein the thickness dimension of each vane has a maximum value at the inner wall surface and decreases radially into the passageway for dispensing; or wherein the thickness dimension of each vane does not vary from the inner wall surface into the passageway for dispensing.

7. The nozzle (40) of any one of Claims 1 to 6 wherein the thickness dimension of each vane increases along the length of the vane from a minimum value at the outlet (48) for the tubular exit zone (46).

8. The nozzle (40) of any one of Claims 1 to 7 further comprising a mixing chamber attached to the inlet (47) of the tubular exit zone (46).

9. A process for dispensing foamable products with a nozzle (40) comprising a tubular exit zone (46) having an inlet (47) and an outlet (48), comprising the steps of: a) supplying a liquid foamable product comprising at least one blowing agent to the inlet (47) of the tubular exit zone (46), the tubular exit zone (46) having an inner wall surface defining a passageway for dispensing, the passageway having a centerline axis (8); the tubular exit zone (46) further having a plurality of vanes (7) attached to the inner wall surface parallel to the centerline axis (8) with the vanes (7) extending radially into the passageway for dispensing; the vanes (7) having a length having a length dimension, a thickness having a thickness dimension, and a width having a width dimension, the thickness dimension being smaller than the width dimension, and the width dimension being smaller than the length dimension; the length dimension being a distance the vane contacts the inner wall surface parallel to the centerline axis (8), and the thickness dimension being an effective thickness of the vane at the inner wall surface perpendicular to the centerline axis (8); and the width dimension being a distance from the inner wall surface that the vane extends into the passageway for dispensing; and wherein the vanes (7) do not connect or touch at the centerline of the passageway for dispensing; and wherein the outlet (48) for the tubular exit zone (46) is an exit face of the nozzle (40) and the vanes (7) end at the plane of the exit face; and b) dispensing the liquid foamable product from the outlet (48) of the tubular exit zone (46).

10. The process of claim 9, wherein the vanes (7) extend in from the outlet (48) into the tubular exit zone (46) a distance parallel to the centerline that is no more than about one third the total length of the tubular exit zone (46).

11. The process of claim 9 or 10 wherein the nozzle (40) has 3 or more vanes (7), preferably 5 to 10 vanes (7).

12. The process of any one of Claims 9 to 11 wherein the nozzle (40) has vanes (7) symmetrically distributed radially about the centerline of the passageway for dispensing; or wherein the nozzle (40) has vanes (7) unsymmetrically distributed radially about the centerline of the passageway for dispensing.

13. The process of any one of Claims 9 to 12 wherein the width dimension of each vane has a maximum value at the outlet (48) for the tubular exit zone (46) and decreases along the length of the vane.

14. The process of any one of Claims 9 to 13 wherein the thickness dimension of each vane in the nozzle (40) has a maximum value at the inner wall surface and decreases radially into the passageway for dispensing; or wherein the thickness dimension of each vane in the nozzle (40) does not vary from the inner wall surface into the passageway for dispensing and/or wherein the thickness dimension of each vane increases along the length of the vane from a minimum value at the outlet (48) for the tubular exit zone (46).

15. The process of any one of Claims 8 to 14 wherein the nozzle (40) further comprises a mixing chamber attached to the inlet (47) of the tubular exit zone (46) and/or wherein the blowing agent is carbon dioxide.

## Patentansprüche

1. Düse (40), die zum Ausgeben von flüssigen, schäumbaren Produkten geeignet ist, wobei die Düse (40) einen rohrförmigen Austrittsbereich (46) umfasst, der einen Einlass (47) und einen Auslass (48) aufweist; wobei der rohrförmige Austrittsbereich (46) eine Innenwandfläche aufweist, die einen Durchgang zum Ausgeben definiert, wobei der Durchgang eine Mittelachse (8) aufweist; wobei der rohrförmige Austrittsbereich (46) weiter eine Vielzahl von Schaufeln (7) aufweist, die parallel zur Mittellinie (8) an der Innenwandfläche angebracht sind, wobei sich die Schaufeln (7) radial in den Durchgang zum Ausgeben erstrecken; wobei die Schaufeln (7) eine Länge aufweisen, die eine Längenabmessung aufweist, eine Dicke, die eine Dickenabmessung aufweist, und eine Breite, die eine Breitenabmessung aufweist, wobei die Dickenabmessung kleiner ist als die Breitenabmessung und die Breitenabmessung kleiner ist als die Längenabmessung; wobei die Längenabmessung ein Abstand ist, um den die Schaufel die Innenwandfläche parallel zur Mittellinie (8) berührt, und die Dicke eine effektive Dicke der Schaufel an der Innenwandfläche senkrecht zur Mittellinie (8) ist; und wobei die Breitenabmessung ein Abstand von der Innenwandfläche ist, um den sich die Schaufel in den Durchgang zum Ausgeben hinein erstreckt; und wobei sich die Schaufeln (7) an der Mittellinie des Durchgangs zum Ausgeben nicht verbinden oder berühren; und **dadurch gekennzeichnet, dass** der Auslass (48) für den rohrförmigen Austrittsbereich (46) eine Austrittsfläche der Düse (40) ist und die Schaufeln (7) an der Ebene der Austrittsfläche enden.

2. Düse (40) nach Anspruch 1, wobei sich die Schaufeln (7) vom Auslass (48) in den rohrförmigen Austrittsbereich (46) um einen Abstand parallel zur Mittellinie erstrecken, der nicht mehr als etwa ein Drittel der Gesamtlänge des rohrförmigen Austrittsbereichs (46) beträgt.

3. Düse (40) nach Anspruch 1 oder 2, die 3 oder mehr Schaufeln (7), vorzugsweise 5 bis 10 Schaufeln (7), aufweist.

4. Düse (40) nach einem der Ansprüche 1 bis 3, wobei die Schaufeln (7) radial symmetrisch um die Mittellinie des Durchgangs zum Ausgeben verteilt sind; oder wobei die Schaufeln (7) radial asymmetrisch um die Mittellinie des Durchgangs zum Ausgeben verteilt sind.

5. Düse (40) nach einem der Ansprüche 1 bis 4, wobei die Breitenabmessung jeder Schaufel einen Maximalwert am Auslass (48) für den rohrförmigen Austrittsbereich (46) aufweist und entlang der Länge der Schaufel abnimmt.

6. Düse (40) nach einem der Ansprüche 1 bis 5, wobei die Dickenabmessung jeder Schaufel an der Innenwandfläche einen Maximalwert aufweist und sich radial in den Durchgang zum Ausgeben abnimmt; oder wobei die Dickenabmessung jeder Schaufel von der Innenwandfläche in den Durchgang zum Ausgeben nicht variiert.

7. Düse (40) nach einem der Ansprüche 1 bis 6, wobei die Dickenabmessung jeder Schaufel entlang ihrer Länge von einem Minimalwert am Auslass (48) für den rohrförmigen Austrittsbereich (46) zunimmt.

8. Düse (40) nach einem der Ansprüche 1 bis 7, weiter umfassend eine Mischkammer, die am Einlass (47) des rohrförmigen Austrittsbereichs (46) angebracht ist.

9. Prozess zum Ausgeben von schäumbaren Produkten mit einer Düse (40), umfassend einen rohrförmigen Austrittsbereich (46), der einen Einlass (47) und einen Auslass (48) aufweist, umfassend die folgenden Schritte: a) Zuführen eines flüssigen, schäumbaren Produkts, umfassend mindestens ein Treibmittel, zum Einlass (47) des rohrförmigen Austrittsbereichs (46), wobei der rohrförmige Austrittsbereich (46) eine Innenwandfläche aufweist, die einen Durchgang zum Ausgeben definiert, wobei der Durchgang eine Mittellinie (8) aufweist; wobei der rohrförmige Austrittsbereich (46) weiter eine Vielzahl von Schaufeln (7) aufweist, die parallel zur Mittellinie (8) an der Innenwandfläche angebracht sind, wobei sich die Schaufeln (7) radial in den Durchgang zum Ausgeben hinein erstrecken; wobei die Schaufeln (7) eine Länge aufweisen, die eine Längenabmessung aufweist, eine Dicke, die eine Dickenabmessung aufweist, und eine Breite, die eine Breitenabmessung aufweist, wobei die Dickenabmessung kleiner ist als die Breitenabmessung und die Breitenabmessung kleiner ist als die Längenabmessung; wobei die Längenabmessung ein Abstand ist, um den die Schaufel die Innenwandfläche parallel zur Mittellinie (8) berührt, und die Dickenabmessung eine effektive Dicke der Schaufel an der Innenwandfläche senkrecht zur Mittellinie (8) ist; und wobei die Breitenabmessung ein Abstand von der Innenwandfläche ist, um den sich die Schaufel in den Durchgang zum Ausgeben erstreckt; und wobei sich die Schaufeln (7) an der Mittellinie des Durchgangs zum Ausgeben nicht verbinden oder berühren; und wobei der Auslass (48) für den rohrförmigen Austrittsbereich (46) eine Austrittsfläche der Düse (40) ist und die Schaufeln (7) an der Ebene der Austrittsfläche enden; und b) Ausgeben des flüssigen, schäumbaren Produkts aus dem Auslass (48) des rohrförmigen Austrittsbereichs (46).

10. Prozess nach Anspruch 9, wobei sich die Schaufeln (7) vom Auslass (48) in den rohrförmigen Austrittsbereich (46) um einen Abstand parallel zur Mittellinie erstrecken, der nicht mehr als etwa ein Drittel der Gesamtlänge des rohrförmigen Austrittsbereichs (46) beträgt.

11. Prozess nach Anspruch 9 oder 10, wobei die Düse (40) 3 oder mehr Schaufeln (7), vorzugsweise 5 bis 10 Schaufeln (7), aufweist.

12. Prozess nach einem der Ansprüche 9 bis 11, wobei die Düse (40) Schaufeln (7) aufweist, die radial symmetrisch um die Mittellinie des Durchgangs zum Ausgeben angeordnet sind; oder wobei die Düse (40) Schaufeln (7) aufweist, die radial asymmetrisch um die Mittellinie des Durchgangs zum Ausgeben angeordnet sind.

13. Prozess nach einem der Ansprüche 9 bis 12, wobei die Breitenabmessung jeder Schaufel einen Maximalwert am Auslass (48) für den rohrförmigen Austrittsbereich (46) aufweist und entlang der Länge der Schaufel abnimmt.

14. Prozess nach einem der Ansprüche 9 bis 13, wobei die Dickenabmessung jeder Schaufel in der Düse (40) einen Maximalwert an der Innenwandfläche aufweist und radial in den Durchgang zum Ausgeben abnimmt; oder wobei die Dickenabmessung jeder Schaufel in der Düse (40) von der Innenwandfläche in den Durchgang zum Ausbringen nicht variiert und/oder wobei die Dickenabmessung jeder Schaufel entlang der Länge der Schaufel von einem Minimalwert am Auslass (48) für den rohrförmigen Austrittsbereich (46) zunimmt.

15. Prozess nach einem der Ansprüche 8 bis 14, wobei die Düse (40) weiter eine Mischkammer umfasst, die am Einlass (47) des rohrförmigen Austrittsbereichs (46) angebracht ist, und/oder wobei das Treibmittel Kohlendioxid ist.

## Revendications

1. Buse (40) adaptée à la distribution de produits liquides moussants, la buse (40) comprenant une zone de sortie tubulaire (46) présentant une entrée (47) et une sortie (48); la zone de sortie tubulaire (46) présentant une surface de paroi intérieure définissant un passage de distribution, le passage présentant un axe de ligne centrale (8) ; la zone de sortie tubulaire (46) présentant en outre une pluralité d'aubes (7) fixées à la surface de paroi intérieure parallèlement à l'axe de ligne centrale (8), les aubes (7) s'étendant radialement dans le passage de distribution ; les aubes (7) présentant une longueur présentant une dimension de longueur, une épaisseur présentant une dimension d'épaisseur et une largeur présentant une dimension de largeur, la dimension d'épaisseur étant inférieure à la dimension de largeur et la dimension de largeur étant inférieure à la dimension de longueur ; la dimension de longueur étant une distance de contact de l'aube avec la surface de paroi intérieure parallèle à l'axe de ligne centrale (8), et la dimension d'épaisseur étant une épaisseur effective de l'aube au niveau de la surface de paroi intérieure perpendiculaire à l'axe de ligne centrale (8), et la dimension de largeur étant une distance à partir de la surface de paroi intérieure sur laquelle l'aube s'étend dans le passage de distribution ; et dans lequel les aubes (7) ne se connectent pas ou ne se touchent pas au niveau de la ligne centrale du passage de distribution ; et **caractérisée en ce que** la sortie (48) de la zone de sortie tubulaire (46) est une face de sortie de la buse (40) et que les aubes (7) se terminent au niveau du plan de la face de sortie.

2. Buse (40) selon la revendication 1, dans laquelle les aubes (7) s'étendent de la sortie (48) dans la zone de sortie tubulaire (46) sur une distance parallèle à l'axe de ligne centrale qui ne dépasse pas environ un tiers de la longueur totale de la zone de sortie tubulaire (46).

3. Buse (40) selon la revendication 1 ou 2 présentant 3 aubes (7) ou plus, de préférence de 5 à 10 aubes (7).

4. Buse (40) selon l'une quelconque des revendications 1 à 3 dans laquelle les aubes (7) sont réparties symétriquement radialement autour de l'axe de ligne centrale du passage de distribution ; ou dans laquelle les aubes (7) sont réparties asymétriquement radialement autour de l'axe de ligne centrale du passage de distribution.

5. Buse (40) selon l'une quelconque des revendications 1 à 4 dans laquelle la dimension de largeur de chaque aube présente une valeur maximale au niveau de la sortie (48) pour la zone de sortie tubulaire (46) et diminue le long de la longueur de l'aube.

6. Buse (40) selon l'une quelconque des revendications 1 à 5 dans laquelle la dimension d'épaisseur de chaque aube présente une valeur maximale au niveau de la surface de paroi intérieure et diminue radialement dans le passage de distribution ; ou dans laquelle la dimension d'épaisseur de chaque aube ne varie pas depuis la surface de paroi intérieure jusque dans le passage de distribution.

7. Buse (40) selon l'une quelconque des revendications 1 à 6 dans laquelle la dimension d'épaisseur de chaque aube augmente sur la longueur de l'aube à partir d'une valeur minimale au niveau de la sortie (48) pour la zone de sortie tubulaire (46).

8. Buse (40) selon l'une quelconque des revendications 1 à 7 comprenant en outre une chambre de mélange fixée à l'entrée (47) de la zone de sortie tubulaire (46).

9. Processus de distribution de produits moussants à l'aide d'une buse (40) comprenant une zone de sortie tubulaire (46) présentant une entrée (47) et une sortie (48), comprenant les étapes consistant à : a) fournir un produit moussant liquide comprenant au moins un agent gonflant à l'entrée (47) de la zone de sortie tubulaire (46), la zone de sortie tubulaire (46) présentant une surface de paroi intérieure définissant un passage de distribution, le passage présentant un axe de ligne centrale (8) ; la zone de sortie tubulaire (46) présentant en outre une pluralité d'aubes (7) fixées à la surface de paroi intérieure parallèlement à l'axe de ligne centrale (8), les aubes (7) s'étendant radialement dans le passage de distribution ; les aubes (7) présentant une longueur présentant une dimension de longueur, une épaisseur présentant une dimension d'épaisseur et une largeur présentant une dimension de largeur, la dimension d'épaisseur étant inférieure à la dimension de largeur et la dimension de largeur étant inférieure à la dimension de longueur ; la dimension de longueur étant une distance de contact de l'aube avec la surface de paroi intérieure parallèle à l'axe de ligne centrale (8), et la dimension d'épaisseur étant une épaisseur effective de l'aube au niveau de la surface de paroi intérieure perpendiculaire à l'axe de ligne centrale (8), et la dimension de largeur étant une distance à partir de la surface de paroi intérieure sur laquelle l'aube s'étend dans le passage de distribution ; et dans lequel les aubes (7) ne se connectent pas ou ne se touchent pas au niveau de l'axe de ligne centrale du passage de distribution ; et dans lequel la sortie (48) de la zone de sortie tubulaire (46) est une face de sortie de la buse (40) et que les aubes (7) se terminent au niveau du plan de la face de sortie ; et b) distribuer le produit moussant liquide à partir de la sortie (48) de la zone de sortie tubulaire (46).

10. Processus selon la revendication 9, dans lequel les aubes (7) s'étendent de la sortie (48) dans la zone de sortie tubulaire (46) sur une distance parallèle à l'axe de ligne centrale qui ne dépasse pas environ un tiers de la longueur totale de la zone de sortie tubulaire (46).

11. Processus selon la revendication 9 ou 10, dans lequel la buse (40) présente 3 aubes (7) ou plus, de préférence de 5 à 10 aubes (7).

12. Processus selon l'une quelconque des revendications 9 à 11, dans lequel la buse (40) présente des aubes (7) réparties symétriquement radialement autour de l'axe de ligne centrale du passage de distribution ; ou dans lequel la buse (40) présente des aubes (7) réparties asymétriquement radialement autour de l'axe de ligne centrale du passage de distribution.

13. Processus selon l'une quelconque des revendications 9 à 12, dans lequel la dimension de largeur de chaque aube présente une valeur maximale au niveau de la sortie (48) pour la zone de sortie tubulaire (46) et diminue le long de la longueur de l'aube.

14. Processus selon l'une quelconque des revendications 9 à 13, dans lequel la dimension d'épaisseur de chaque aube de la buse (40) présente une valeur maximale au niveau de la surface de paroi intérieure et diminue radialement dans le passage de distribution ; ou dans lequel la dimension d'épaisseur de chaque aube de la buse (40) ne varie pas depuis la surface de paroi intérieure jusque dans le passage de distribution et/ou dans lequel la dimension d'épaisseur de chaque aube augmente sur la longueur de l'aube à partir d'une valeur minimale au niveau de la sortie (48) pour la zone de sortie tubulaire (46).

15. Processus selon l'une quelconque des revendications 8 à 14, dans lequel la buse (40) comprend en outre une chambre de mélange fixée à l'entrée (47) de la zone de sortie tubulaire (46) et/ou dans lequel l'agent gonflant est le dioxyde de carbone.
